# EUROPEAN PATENT APPLICATION

(11) **EP 2 570 882 A2**
(43) Date of publication of application: **20.03.2013**
(21) Application number: 12161653.6
(22) Date of filing: 28.03.2012
(51) Int. Cl.: G06F 1/16, G06F 1/26

(54) **Power docking station and universal transmission interface**

(30) Priority: 22.07.2011 US 201161510502 P; 22.12.2011 TW 100147902
(71) Applicant: Acer Incorporated, Hsichih, Taipei Hsien 221 (TW)
(72) Inventor: Sip, Kim Yeung, 221 Taipei Hsien (TW)
(74) Representative: Becker Kurig Straus

(57) **Abstract**

A power docking station includes at least one first interface, for connecting to a data transmission interface; at least one second interface, for connecting to a power transmission interface; and an interface control module, coupled to the at least one first interface and the at least one second interface, for allotting power which is transmitted to the first and the second interface.

## Description

### CROSS REFERENCE TO RELATED APPILCATIONS

This Non-provisional application claims priority under 35 U.S.C. §119(a) on Patent Application No(s).100147902, filed in Taiwan, Republic of China on Dec. 22, 2011, and Patent Application No(s). 61/510502, filed in United State of American on July. 22, 2011 the entire contents of which are hereby incorporated by reference.

### BACKGROUND OF THE INVENTION

### Field of the Invention

The present invention relates to the data transmission and power supply in a computer system or computer systems.

### Description of the Related Art

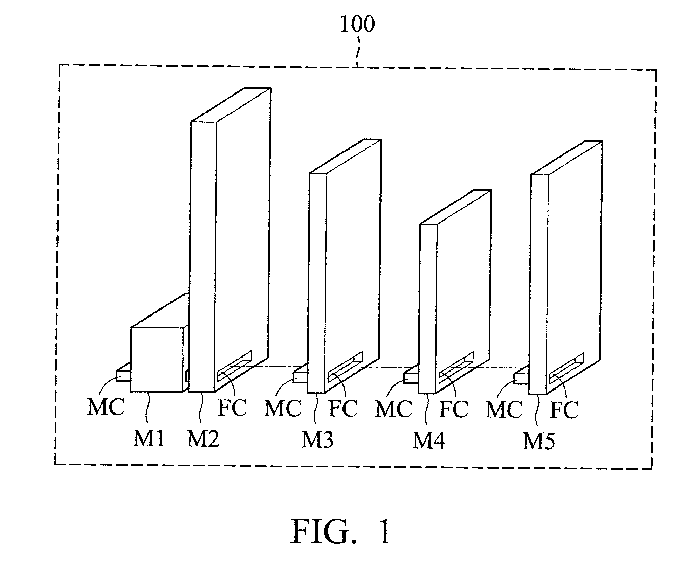

Acer Inc provides a daisy chain computer system for integrating the advantage of desktop computers and laptop computers. Fig. 1 is schematic diagram of a daisy chain computer system.

As shown in Fig. 1, the computer system 100 has electrical devices M1∼M5, where male connectors MC and female connectors FC are connected with each other. The electrical devices M1∼M5 may be various peripheral devices, which comprises a mainframe with a CPU, an optical disk driver, a hard disk, a graphic processing unit, a sound card, or a microphone. Each of the electrical devices M1∼M5 can operate independently or be combined therebetween.

To simplify the daisy chain computer system, in some designs, one transmission interface which can either transmit data or supply power, such as a universal serial bus (USB) or thunderbolt interface, is used. In the prior art, although the power supplied by the interface is strong enough for driving the peripheral devices of a computer, it is usually unable to drive another computer system due to its limited capacity.

Therefore, the present invention provides a power docking station and a universal transmission interface to overcome the defects in the prior art.

### BRIEF SUMMARY OF THE INVENTION

A power docking station is provided. The power docking station comprises: at least one first interface, for connecting to a data transmission interface; at least one second interface, for connecting to a power transmission interface; and an interface control module, coupled to the at least one first interface and the at least one second interface, for allotting power which is transmitted to the first and the second interface.

A universal transmission interface is provided. The universal transmission interface comprises a data transmission interface; and a power transmission interface, wherein the power transmission interface comprises a power positive end and a power negative end.

A detailed description is given in the following embodiments with reference to the accompanying drawings.

### BRIEF DESCRIPTION OF THE DRAWINGS

The present invention can be more fully understood by reading the subsequent detailed description and examples with references made to the accompanying drawings, wherein:

Fig. 1 is schematic diagram of a daisy chain computer system.

Fig. 2 shows a power docking station and other electrical devices connected to the power docking station according to an embodiment of the present invention.

Fig. 3 is a schematic diagram showing the components of the power docking station M1 in Fig. 2.

Figs. 4A and 4B respectively shows the profile of the universal transmission interfaces in a male connector form and in a female connector form according to an embodiment of the present invention.

Figs. 5Aand 5B respectively shows the profile of the universal transmission interface in a male connector form and female connector form according to another embodiment of the present invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

### Power Docking Station

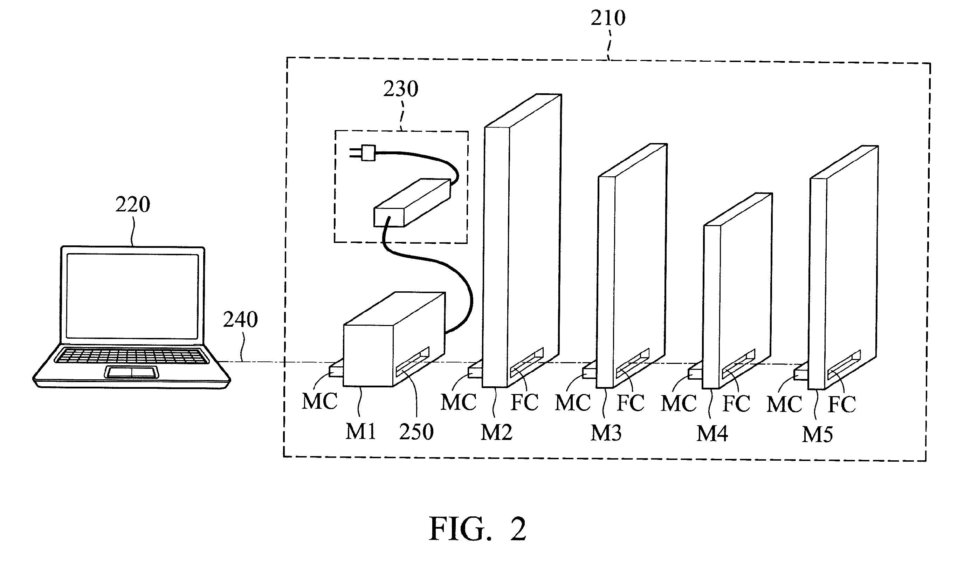

Fig. 2 shows a power docking station and other electrical devices connected to the power docking station according to an embodiment of the present invention. In this embodiment, as shown in Fig. 2, the power docking station M1 of the present invention can be one part of the entire daisy chain computer system 210, and the other electrical devices M2∼M5 in the daisy chain computer system 210 may be various peripheral devices such as a mainframe with a CPU, an optical disk driver, a hard disk, a graphic processing unit, a sound card, or a microphone. The power docking station M1 of the present invention can be connected with another computer system 220 (shown as a laptop computer in Fig. 2), and operates as a relay station between the computer systems 210 and 220 for transmitting data and power with each other. In particular, since the power docking station M1 of the present invention has a power input end 230 for obtaining the power (usually with AC current, but the present invention is not limited thereto) from the outside, the driving capacity for the computer system is increased.

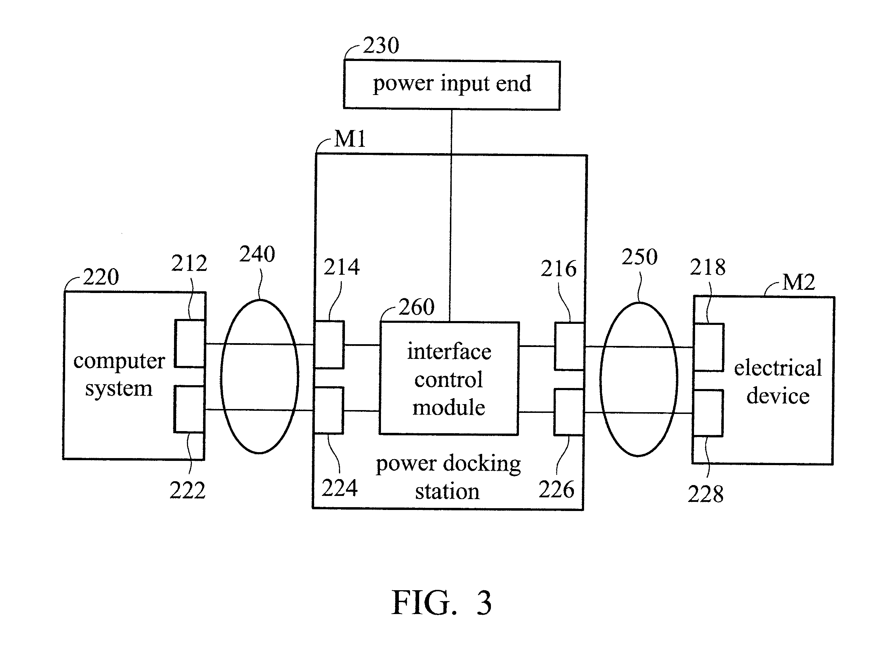

Fig. 3 is a schematic diagram showing the components of the power docking station M1 in Fig. 2. Please refer to Figs. 2 and 3. As shown in Figs. 2 and 3, in addition to the power input end 230, the power docking station M1 of the present invention further comprises first interfaces 214 and 216, second interfaces 224 and 226, and an interface control module 260.

The first interface 214 and 216 of the power docking station M1 are respectively used for connecting with the data transmission interface 212 of the (laptop) computer system 220 and the data transmission interface 218 of an electrical devices M2 of the daisy chain computer system 210. The "data transmission interface", for example, is an USB interface, a thunderbolt interface, or any interface which can either transmit data or supply power. Universally, the USB interface can provide a voltage of 5V and current of at most 500mA; while the thunderbolt interface can provides two voltages, 3.3V and 12V, and current of at most 1A. Since the thunderbolt interface can supply higher power, in a preferred embodiment, the first interface of the power docking station M1 of the present invention is the thunderbolt interface.

The second interface 224 and 226 of the power docking station M1 are respectively used for connecting with the power transmission interface 222 of the (laptop) computer system 220 and the power transmission interface 228 of the electrical devices M2. The "power transmission interface" of the present invention is purely used for supplying power. In the laptop computer system 220, for example, the power transmission interface 222 can be a power socket hole for connecting with a 19V power line. It should be noted that in some embodiments, for simplifying the combination of the electrical devices (i.e., M1∼M5) in the daisy chain computer system 210, the power transmission interface is usually omitted, and only the transmission interface which can either transmit data or supply power remains, which is shown by the male connectors MC and the female connectors FC in Fig. 2.

The interface control module 260 of the present invention is coupled to the first interface 214 and 216, the second interface 224 and 228, and power input end 230. The main use of the interface control module 260 is to allot power transmitted to the first interface 214 and 216 and the second interface 224 and 228. The interface control module 260 can operate in various modes as follows:
(1) First mode-when the power input end 230 is not connected to the power :
   At this moment, the interface control module 260 controls the first interface 214 and 216 of the power docking station M1 to connect to each other, so that the computer systems 210 and 220 can transmit data with each other. In this mode, only data is transmitted between the two computer systems; since there is no power supplied from the outside, it is not necessary for the second interface 224 and 226 to connect to each other.
(2) Second mode-when the power input end 230 is appropriately connected to the power, and the first interfaces (214/216) and the second interfaces (224/226) are respectively connected to the data transmission interfaces (212/218) and the power transmission interfaces (222/228) of the other devices:
   At this moment, the interface control module 260 allots the power obtained by the power input end 230 to the second interfaces 224 and 226 so that the computer system 220 and the electrical devices M2 acquire the power. In this mode, the interface control module 260 connects the first interfaces 214 and 216 of the power docking station M1 to each other.
(3) Third mode-when the power input end 230 is appropriately connected to the power, the first interfaces (214/216) are connected to the data transmission interfaces (212/218) of the other devices, but the second interfaces (224/226) are not connected to the power transmission interfaces (222/228):
   At this moment, the interface control module 260 operates in a way, where it controls the power input end 230 and the first interfaces (214/216) to connect to each other, re-allots the obtained power to the first interfaces (214/216), and transmits the power to the first interfaces (214/216) and then to the data transmission interfaces (212/218) of the other devices (220/M2). For example, the interface control module 260 directs the power (e.g., 19V), which is originally provided to the second interfaces (224/226), to the first interfaces (214/216), without the limitation from the voltage upper limit of the data transmission interfaces (212/218) (for example, the thunderbolt interface has a 12V voltage upper limit).

It should be noted that the interface control module 260 of the power docking station M1 of the present invention can be embodied by combining various switches and voltage converters. Since those skilled in the art can establish the power docking station of the present invention by using various electrical components, further description will be omitted herein.

### Universal Transmission Interface

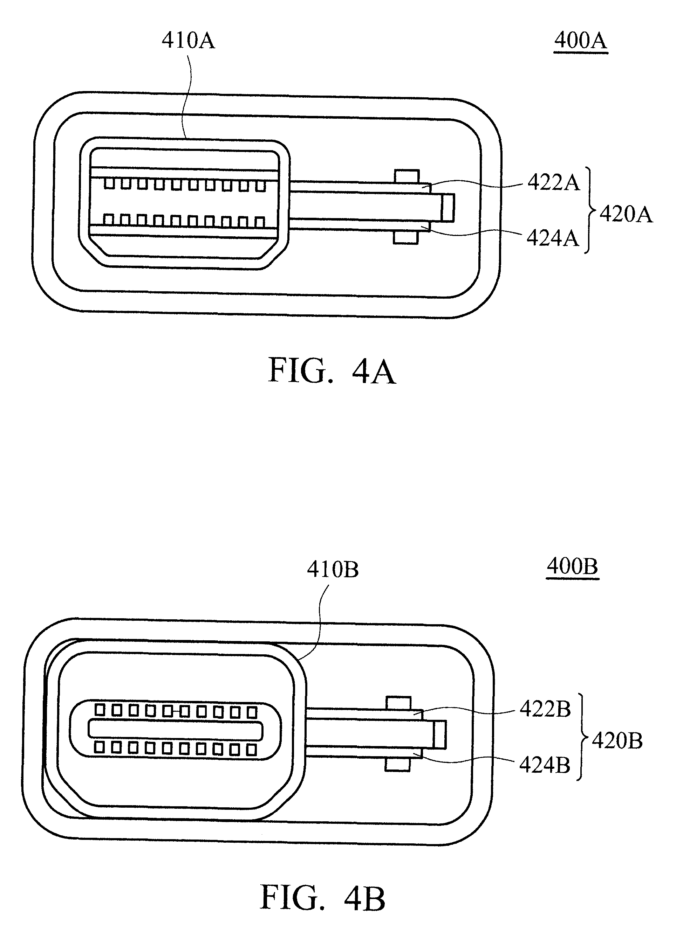

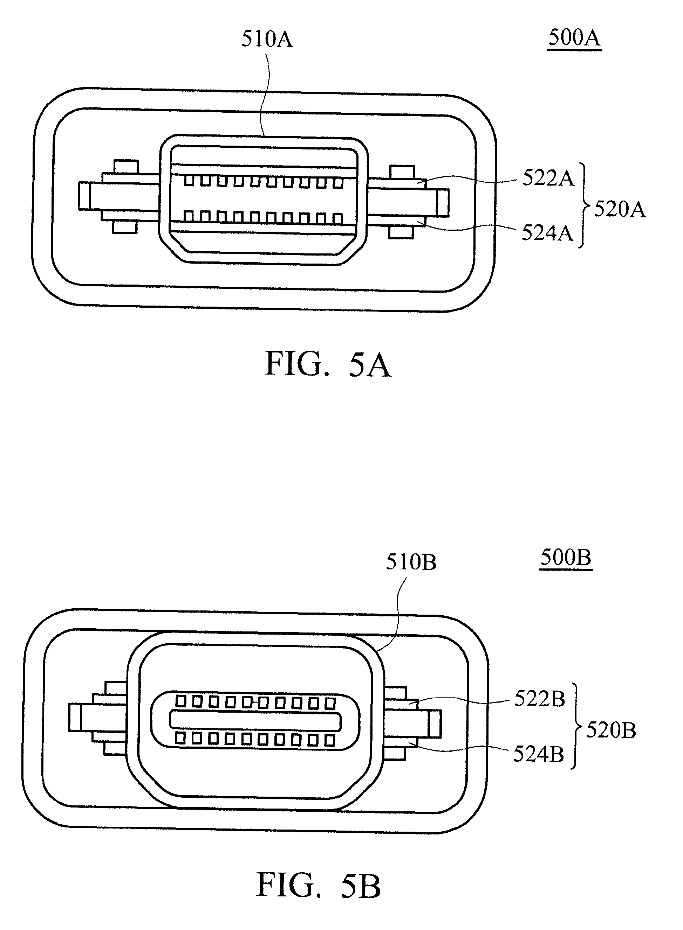

In the embodiment shown in Fig. 3, similar to the prior art, the data transmission interface 212 and the power transmission interface 222 of the computer system 220 are respectively connected to the first interface 214 and the second interface 224 of the power docking station M1 of the present invention through two independent routes. To further simplify the connection between these two computer systems, the present invention further provides an universal transmission interface to integrate the data transmission interface and the power transmission interface into a single wire. Figs. 4A and 4B respectively shows the profile of the universal transmission interfaces in a male connector form and in a female connector form according to an embodiment of the present invention. In this embodiment, the universal transmission interface 400A in the male connector form has an data transmission interface 410A (e.g., thunderbolt interface) and a power transmission interface 420A, which are respectively used to connect to a data transmission interface 410B and a power transmission interface 420B of the universal transmission interface 400B in the female connector form. In this embodiment, the power transmission interface 420A further comprises a power positive end 422A and a power negative end 424A, and the power transmission interface 420B further comprises a power positive end 422B and a power negative end 424B. The power transmission interface 420A and 420B are all closely adjacent to the data transmission interface. Figs. 5Aand 5B respectively shows the profile of the universal transmission interface in a male connector form and female connector form according to another embodiment of the present invention. The embodiment in Figs. 5A and 5B is a modification of Figs. 4A and 4B, where the universal transmission interfaces have more symmetrical appearances. Although the appearances of the power transmission interfaces are shown in the Figs, the present invention should not be limited thereto.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A power docking station, comprising:
at least one first interface, for connecting to a data transmission interface;
at least one second interface, for connecting to a power transmission interface; and
an interface control module, coupled to the at least one first interface and the at least one second interface, for allotting power which is transmitted to the first and the second interface.

2. The power docking station as claimed in claim 1, further comprising: a power input end, which is coupled to the interface control module for obtaining the power from the outside of the power docking station.

3. The power docking station as claimed in claim 1, wherein the first interface is a thunderbolt transmission interface.

4. The power docking station as claimed in claim 1, wherein the first interface is an universal serial bus (USB).

5. The power docking station as claimed in claim 2, wherein, when the power input end is connected to the power, and the first interface is connected to the data transmission interface, but the second interface is not yet connected to the power transmission interface, the interface control module transmits the power to the data transmission interface through the first interface.

6. The power docking station as claimed in claim 1, wherein the power docking station is disposed in a daisy chain computer system.

7. A universal transmission interface, comprising :
a data transmission interface; and
a power transmission interface, wherein the power transmission interface comprises a power positive end and a power negative end.

8. The universal transmission interface as claimed in claim 7, wherein the data transmission interface is a thunderbolt transmission interface.

9. The universal transmission interface as claimed in claim 7, wherein the data transmission interface is an universal serial bus (USB).
